# EUROPÄISCHE PATENTSCHRIFT

(11) **EP 3 766 770 B1**
(45) Veröffentlichungstag und Bekanntmachung des Hinweises auf die Patenterteilung: **19.11.2025**
(21) Anmeldenummer: 20153428.6
(22) Anmeldetag: 23.01.2020
(51) Int. Cl.: B62J 11/10, B62J 11/13, F16C 1/10

(54) **ZUGDURCHFÜHRUNG FÜR EIN FAHRRAD**
CABLE FEEDTHROUGH FOR A BICYCLE
GUIDAGE DE CÂBLE POUR UN VÉLO

(30) Priorität: 19.07.2019 DE 202019103990 U
(43) Veröffentlichungstag der Anmeldung: 20.01.2021
(73) Patentinhaber: MPR GmbH & Co. KG, 95615 Marktredwitz (DE)
(72) Erfinder: Pürner, Marcus, 95615 Marktredwitz (DE)
(74) Vertreter: Friderichs, Gunther

(56) Entgegenhaltungen:
- EP-A1- 2 397 737
- EP-A1- 2 474 463
- EP-A1- 2 842 852
- EP-A1- 3 034 386
- EP-A1- 3 243 704
- EP-A2- 2 159 140
- EP-A2- 2 546 132
- US-A- 2 517 693
- US-A- 3 506 999
- US-B1- 7 294 789

## Beschreibung

### Gebiet der Erfindung

Die Erfindung betrifft eine Zugdurchführung für ein Fahrrad, also eine einsetzbare Durchführung, über die Züge oder Kabel in den Rahmen oder die Gabel eines Fahrrads einführbar sind.

### Hintergrund der Erfindung

Für die innenliegende Verlegung von Zügen für Schaltung und Bremse oder Kabel sind sogenannte Zugdurchführungen bekannt. Derartige Zugdurchführungen werden für Fahrräder verwendet, zu denen z.B. auch E-Bikes, Pedelecs und Lastenräder (auch mit drei oder vier Rädern) zählen.

So zeigt die Offenlegungsschrift EP 3 034 386 A1 eine zweiteilig ausgebildete Zugdurchführung, welche sich formschlüssig in die Öffnung eines Rahmens einsetzen lässt.

Dadurch, dass sich die Zugdurchführung einfädeln lässt, ist eine einfache Montage gewährleistet.

Nachteilig ist allerdings, dass der Zug bzw. das Kabel durch die Öffnung, die durch die Zugdurchführung gebildet wird, durchgezogen werden muss.

Das Dokument EP 2 842 852 A1 zeigt eine Zugdurchführung mit einem zweiteiligen Oberteil, dessen beiden Hälften um das Kabel herum zusammengeklippst werden können.

### Aufgabe der Erfindung

Der Erfindung liegt demgegenüber die Aufgabe zugrunde, die Montage einer Zugdurchführung noch einfacher auszugestalten.

Weiter soll das Einfädeln der Zugdurchführung in der Öffnung erleichtert und/oder der Sitz der Zugdurchführung in der Öffnung verbessert werden.

### Zusammenfassung der Erfindung

Die Aufgabe der Erfindung wird bereits durch eine Zugdurchführung für ein Fahrrad nach Anspruch 1 gelöst.

Bevorzugte Ausführungsformen und Weiterbildungen der Erfindung sind dem Gegenstand der abhängigen Ansprüche, der Beschreibung sowie den Zeichnungen zu entnehmen.

Die Erfindung betrifft eine Zugdurchführung für ein Fahrrad. Insbesondere betrifft die Erfindung eine Zugdurchführung, welche in die Öffnung des Rohres eines Rahmens oder einer Gabel des Fahrrad eingesetzt wird.

Die Zugdurchführung umfasst ein Oberteil und ein Unterteil, wobei Oberteil und Unterteil durch Zusammenziehen in einer Öffnung eines Rahmens bzw. einer Gabel festlegbar sind.

Vorzugsweise erfolgt das Festlegen formschlüssig, wobei eine Kante des Oberteils oder Unterteils an jeder Seite der Öffnung anliegt.

Als Durchführung für einen Zug oder ein Kabel erstreckt sich zumindest ein Kanal durch Oberteil und Unterteil.

Die Zugdurchführung kann auch sowohl dem Verlegen von Zügen im engeren Sinne, als auch von elektrischen oder hydraulischen Leitungen dienen.

Gemäß der Erfindung umfasst das Oberteil und/oder das Unterteil einen seitlichen Schlitz zum Einfädeln eines Zugs oder eines Kabels in den zumindest einen Kanal.

Der zumindest eine Kanal ist also seitlich über den Schlitz zugänglich.

Zur Montage kann der Schlitz aufgebogen und der Zug oder das Kabel in den Kanal eingeführt werden.

Es versteht sich, dass in nicht aufgeweitetem Zustand der Schlitz schmäler ist als der Zug oder das Kabel, welches durch den Schlitz geführt werden soll. So wird der Zug oder das Kabel nach dem Aufweiten und Einsetzen in Position gehalten.

Insbesondere beträgt die Breite des Schlitzes bei einer Ausführungsform der Erfindung weniger als 3 mm, bevorzugt weniger als 1 und besonders bevorzugt weniger als 0,5 mm.

Gemäß einer bevorzugten Ausführungsform der Erfindung umfasst nur das Oberteil einen seitlichen Schlitz. So braucht zum Einfädeln des Zugs oder des Kabels in den Kanal nur das Oberteil auseinandergespreizt bzw. aufgeweitet zu werden.

Der Kanal des Unterteils ist dagegen seitlich derart weit geöffnet, dass zumindest im nichtmontierten Zustand der Zug oder das Kabel seitlich eingeführt werden kann, ohne den Kanal aufzuweiten.

Gemäß einer bevorzugten Ausführungsform der Erfindung umfasst die Seitenwand des Oberteils und/oder Unterteils angrenzend an den Schlitz eine Fase, welche in den Schlitz übergeht.

Die Kante des Schlitzes angrenzend zur Seitenwand ist also derart gefast, dass beim Eindrücken eines Zugs oder eines Kabels der Schlitz aufgeweitet wird. Die Fase hat vorzugsweise eine Breite von mindestens 0,5 mm.

So wird das Einfädeln des Zugs oder des Kabels in den Kanal weiter erleichtert.

Die Fase und der Schlitz verlaufen vorzugsweise parallel zu dem zumindest einen Kanal. Insbesondere stehen Fase, Schlitz und Kanal quer aber nicht senkrecht zur Oberseite des Oberteils.

Gemäß einer Weiterbildung der Erfindung umfasst die Zugdurchführung zumindest zwei Kanäle, welche ineinander übergehen.

In vielen Anwendungsfällen sind mehrere Züge bzw. Kabel durchzuführen. Über Kanäle, die sich überschneiden, also ineinander übergehen, können von einer Seite mehrere Züge bzw. Kabel eingefädelt werden.

Die Kanäle überschneiden sich dabei derart, dass gleichzeitig weiterhin eine Führung für den jeweiligen Zug bzw. das jeweilige Kabel in Form von getrennten kanalförmigen Führungen erhalten bleibt. Insbesondere sind die Kanäle jeweils um mehr als die Hälfte ihres jeweiligen Durchmessers voneinander beabstandet (bezogen auf den seitlichen Abstand zur Kante, die durch die Überschneidung gebildet wird).

Gemäß einer Weiterbildung der Erfindung ist die Zugdurchführung derart ausgebildet, dass der zumindest eine Kanal im montierten Zustand einen Versatz zwischen Oberteil und Unterteil aufweist.

Der Versatz bedingt eine Verengung des freien Querschnitts des Kanals und klemmt somit beim Montieren den Zug oder das Kabel fest.

Bei einem schräg zur Oberseite der Zugdurchführung verlaufenden Kanal kann eine derartige Verengung insbesondere dadurch gebildet werden, dass Oberteil und Unterteil beim Montieren aufeinander zubewegt werden. So können im nichtmontierten Zustand Oberteil und Unterteil noch derart weit voneinander beabstandet sein, dass der Zug bzw. das Kabel ohne Kraftanstrengung durch den Kanal gezogen werden kann. Erst mit dem Montieren und dem damit verbundenen Zug Aufeinanderzubewegen von Oberteil und Unterteil wird der Zug oder das Kabel festgeklemmt.

Vorzugsweise ist der Versatz aber derart dimensioniert, dass der Zug bzw. das Kabel zwar festgeklemmt wird, sich aber weiterhin noch mit Kraftaufwand durch die Zugdurchführung durchziehen lässt. So ist auch noch ein nachträgliches Herausziehen oder Hineindrücken eines Abschnitts des Zugs oder des Kabels möglich. Insbesondere lässt sich der Zug oder das Kabel mit einer Kraft von mehr als 5 N und/oder weniger als 50 N herausziehen.

Im montierten Zustand beträgt der maximale Versatz vorzugsweise weniger als 3 mm und mehr als 0,5 mm.

Gemäß einer bevorzugten Ausführungsform der Erfindung umfasst das Unterteil auf zwei sich gegenüberliegenden Seiten jeweils eine Anlagefläche für die an die Öffnung des Unterteils angrenzende Unterseite des Rahmens bzw. der Gabel.

Die Anlageflächen des Unterteils befinden sich insbesondere an den Schmalseiten des Unterteils.

Die anderen gegenüberliegenden Seiten des Unterteils umfassen dagegen vorzugsweise keine Anlagefläche für die Unterseite des Rahmens bzw. der Gabel.

So kann zum Montieren das Unterteil auf einfache Weise eingefädelt werden, indem dieses zunächst derart weit auf eine Seite hinter die Öffnung geschoben wird, dass die gegenüberliegende Seite des Unterteils durch passt. Sodann kann das Unterteil wieder vorgezogen werden derart, dass die Anlageflächen angrenzend an die Öffnung an der Unterseite des Rahmens bzw. der Gabel anliegen.

Ein die Anlageflächen überragendes verbleibendes Mittelteil sitzt dabei vorzugsweise in der Öffnung und zentriert so formschlüssig das Unterteil in der Öffnung.

Das Oberteil umfasst vorzugsweise eine umlaufende Anlagefläche für die an die Öffnung angrenzende Oberseite des Rahmens bzw. der Gabel.

Da das Oberteil nicht durch die Öffnung eingefädelt werden muss, umfasst dieses vorzugsweise einen Kragen, welcher eine umlaufende Anlagefläche für die Oberseite bildet.

Das Oberteil ist vorzugsweise derart ausgebildet, dass überall eine derart große Breite hat, dass es nicht in die Öffnung des Rahmens bzw. der Gabel eingefädelt werden kann.

Das Oberteil zentriert sich vorzugsweise selbstständig über ein verbleibendes Mittelteil, welches den Kragen, der die Anlagefläche bildet, überragt.

Das vorstehend definierte verbleibende Mittelteil des Ober- oder Unterteils kann polygonal, insbesondere viereckig ausgebildet sein. Vorzugsweise verjüngt sich das verbleibende Mittelteil in einer Einfädelrichtung. Dem entsprechende ist auch die korrespondierende Öffnung im Rahmen bzw. in der Gabel polygonal, insbesondere viereckig, ausgebildet.

Insbesondere sind verbleibendes Mittelteil und Öffnung trapezförmig ausgebildet.

Die Zugdurchführung verjüngt sich vorzugsweise insgesamt in ihrer Breite. Dies erleichtert insbesondere das Einfädeln des Unterteils.

Gemäß einer bevorzugten Ausführungsform der Erfindung ist die Zugdurchführung in der Draufsicht als Viereck ausgebildet.

Insbesondere kann die Zugdurchführung im Wesentlichen trapezförmig ausgebildet sein.

Der zumindest eine Kanal verläuft vorzugsweise schräg, aber nicht senkrecht zur Oberseite der Zugdurchführung.

Insbesondere verläuft der zumindest eine Kanal in einem Winkel von 30° bis 70° zur Oberseite der Zugdurchführung. Dies erleichtert insbesondere das Ausrichten der Züge bzw. Kabel in Richtung des Lenkers, wo Züge bzw. Kabel in der Regel angebracht werden.

Oberteil und Unterteil sind vorzugsweise mittels zumindest einer Schraube zusammenziehbar.

Insbesondere ist vorgesehen, dass Oberteil und Unterteil mittels zwei Schrauben zusammengezogen werden.

So kann, insbesondere wenn Unterteil und/oder Oberteil formschlüssig in die Öffnung greifen, eine Zugdurchführung bereit gestellt werden, welche flexibel für unterschiedliche Wandstärken verwendbar ist.

Die Schrauben sind vorzugsweise diagonal gegenüber angeordnet, wobei zwischen den Schrauben der zumindest eine Kanal positioniert ist.

Die zumindest eine Schraube ist vorzugsweise als gewindeformende Schraube ausgebildet.

Vorzugsweise sind Oberteil und Unterteil vormontiert und im vormontierten Zustand in die Öffnung des Rahmens bzw. der Gabel einsetzbar.

Über eine gewindeformende Schraube ist eine derartige Vormontage besonders einfach zu realisieren, da sich diese beim Eindrehen, insbesondere in ein dafür vorgesehenes Durchgangsloch, verklemmt.

Es ist insbesondere vorgesehen, dass die beiden Schrauben bereits in das Unterteil eingedreht sind und so Oberteil und Unterteil zusammenhalten.

Oberteil und Unterteil können in diesem vormontierten Zustand aber noch derart voneinander beabstandet sein, dass das Unterteil in die Öffnung des Rahmens bzw. der Gabel eingefädelt werden kann.

Zur Montage wird zunächst der Zug bzw. das Kabel seitlich durch den Schlitz in die Zugdurchführung eingefädelt.

Sodann wird das Unterteil in die Öffnung des Rahmens bzw. der Gabel eingefädelt. Das Oberteil ist aufgrund eines hervorstehenden Mittelteils nunmehr bereits formschlüssig in der Öffnung zentriert.

Die Schrauben können nunmehr angezogen werden, um die Zugdurchführung formschlüssig in der Öffnung festzusetzen. Dabei wird der Zug oder das Kabel aufgrund des Versatzes des Kanals eingeklemmt.

Nach dem Befestigen können aber immer noch Anpassungen der herausgeführten Länge durch Herein- oder Herausschieben des Zugs oder des Kabels vorgenommen werden.

### Kurzbeschreibung der Zeichnungen

Der Gegenstand der Erfindung soll im Folgenden bezugnehmend auf die Zeichnungen Fig. 1 bis Fig. 8 anhand eines Ausführungsbeispiels der Erfindung näher erläutert werden.
Fig. 1 ist eine perspektivische Ansicht einer erfindungsgemäßen Zugdurchführung.
Fig. 2 ist eine Seitenansicht der Zugdurchführung auf die Schmalseite.
Fig. 3 ist eine Schnittansicht der Zugdurchführung im montierten Zustand entlang ihrer Haupterstreckungsrichtung.
Fig. 4 zeigt die Zugdurchführung von der Unterseite.
Fig. 5 ist eine perspektivische Ansicht des Unterteils der Zugdurchführung.
Fig. 6 ist eine perspektivische Ansicht des Oberteils der Zugdurchführung.

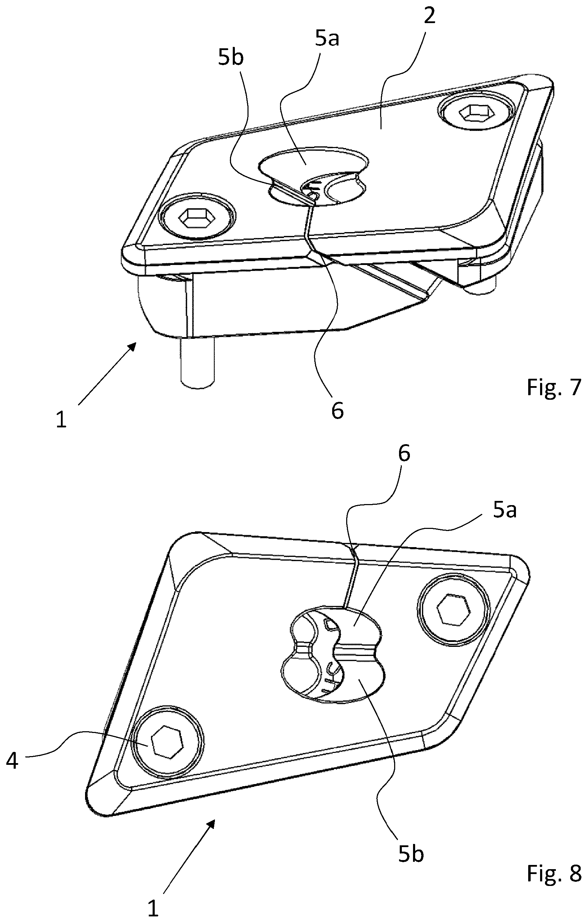

Bezugnehmend auf die perspektivischen Ansichten gemäß Fig. 7 und Fig. 8 soll ein alternatives Ausführungsbeispiel einer Zugdurchführung erläutert werden.

### Detaillierte Beschreibung der Zeichnungen

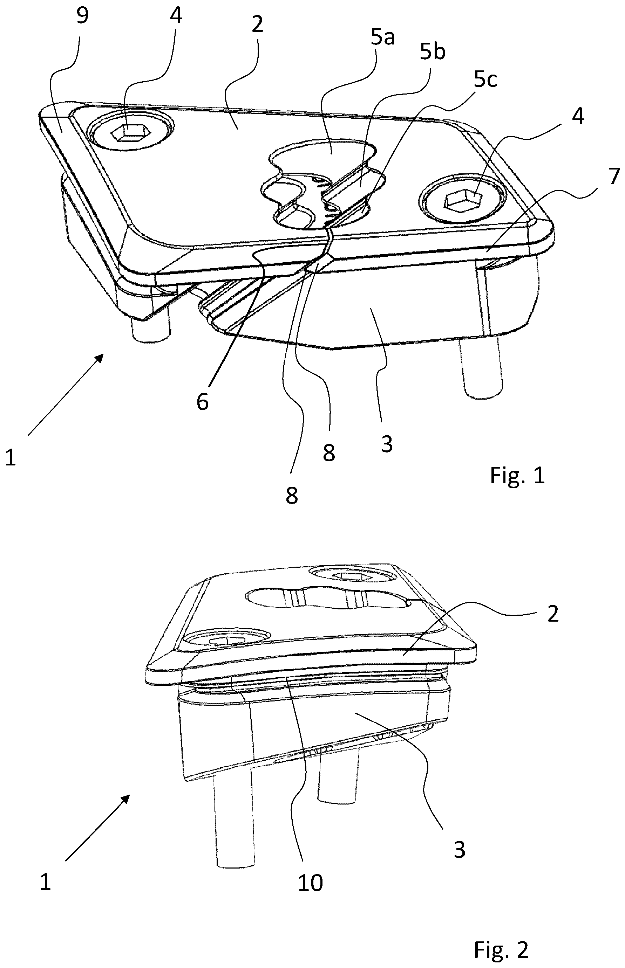

Fig. 1 zeigt in einer perspektivischen Ansicht ein Ausführungsbeispiel einer erfindungsgemäßen Zugdurchführung 1.

Die Zugdurchführung 1 umfasst ein Oberteil 2 sowie ein Unterteil 3.

Oberteil 2 und Unterteil 3 sind mittels den diagonal gegenüberliegenden Schrauben 4 miteinander verbunden.

Die Zugdurchführung 1 umfasst in diesem Ausführungsbeispiel die Kanäle 5a-5c, welche sich schräg, aber nicht senkrecht durch Oberteil 2 und Unterteil 3 erstrecken.

Die Kanäle 5a-5c überschneiden sich, so dass Züge oder Kabel über den äußersten Kanal 5c bis nach innen in den Kanal 5a gedrückt werden können.

Es versteht sich, dass die Kanäle 5a-5c jeweils einen unterschiedlichen an den jeweiligen Zug oder das Kabel angepassten Durchmesser aufweisen können.

Die Seitenwand 7 geht über eine Abschrägung 9 in die Oberseite des Oberteils 2 über.

Die Köpfe der Schrauben 4 sind vorzugsweise vollständig im Oberteil 3 versenkt.

Um einen Zug oder ein Kabel in die Zugdurchführung 1 einfädeln zu können, umfasst das Oberteil 2 einen seitlichen Schlitz 6.

Der Schlitz 6 verläuft parallel zu den Kanälen 5a-5c, also quer, aber nicht senkrecht zur Oberseite.

Angrenzend zur Seitenwand 7 des Oberteils 2 sind die durch den Schlitz 6 gebildeten Kanten jeweils mit einer Fase 8 versehen. Durch die Fasen 8 wird das Oberteil 2 beim Eindrücken eines Zugs oder einen Kabels entlang des Schlitzes 6 aufgeweitet, so dass der Zug bzw. das Kabel von der Seite in die Kanäle 5a-5c eingefädelt werden kann.

Nach dem Einfädeln federt das Oberteil 2 in seine Ausgangsposition zurück und der Zug bzw. dass Kabel ist im jeweiligen Kanal 5a-5c gesichert.

Die Kanäle 5a-5c gegen jeweils ineinander über und bilden so Führungen für die Züge bzw. Kabel.

Fig. 2 ist eine Ansicht auf die Schmalseite der Zugdurchführung 1. In dieser Ansicht ist insbesondere zu erkennen, dass Oberteil 2 und Unterteil 3 der Krümmung des Rahmens angepasst sein können.

Zwischen Oberteil 2 und Unterteil 3 befindet sich in dem hier dargestellten montierten Zustand ein Schlitz 10, innerhalb dessen im montierten Zustand die an die Öffnung angrenzende Wand des Rahmens (nicht dargestellt) eingeschlossen ist.

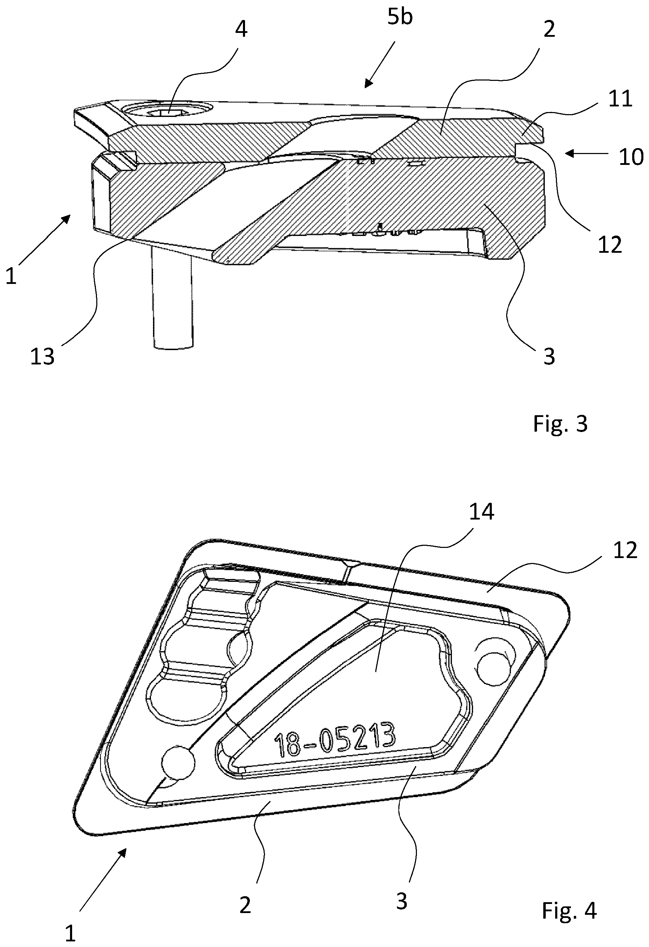

Fig. 3 ist eine Schnittansicht der Zugdurchführung 1 entlang ihrer Haupterstreckungsrichtung.

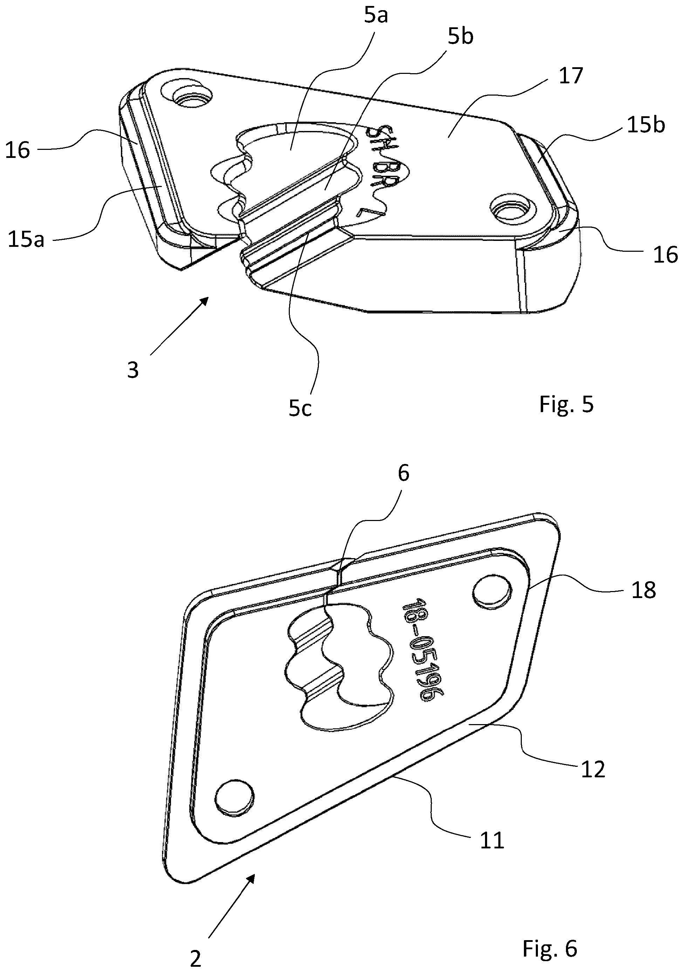

Besonders gut in dieser Ansicht zu erkennen ist der Schlitz 10, der durch einen Kragen 11 des Oberteils 2 sowie das unter dem Kragen hervorragende Unterteil 3 gebildet wird. Der Schlitz wird durch die Anlagefläche 12 des Oberteils 2 und die Anlagefläche 15a bzw. 15b des Unterteils (siehe Fig. 5) gebildet.

Weiter ist zu erkennen, dass der Kanal 5b im montierten Zustand einen Versatz aufweist.

Der durch das Oberteil 2 führende Abschnitt des Kanals 5b geht also über eine Stufe in den im Unterteil 3 liegenden Abschnitt über.

Dadurch, dass der Kanal 5b schräg, aber nicht senkrecht, vorzugsweise in einem Winkel von 30 bis 70° zur Oberseite verläuft, entsteht der Versatz erst, wenn Oberteil 2 und Unterteil 3 durch Anziehen der Schrauben 4 aufeinander zubewegt werden.

Hierdurch verschmälert sich im Bereich des Versatzes der freie Querschnitt des Kanals 5b und der Zug bzw. das Kabel wird eingeklemmt.

Auf der Unterseite ist das Unterteil 3 im Bereich der Kanäle 5a bis 5c mit einer Abschrägung 13 versehen. Hierdurch ist das Unterteil 3 seitlich schmäler ausgebildet und der Zug bzw. das Kabel lässt sich besser innenliegend entlang des Rohres des Rahmens führen.

Fig. 4 ist eine Ansicht der Unterseite der Zugdurchführung 1.

Zu erkennen ist die umlaufende Anlagefläche 12 des Oberteils 2, welche an den Langseiten über das Unterteil 3 hinausragt.

An den Schmalseiten greift dagegen das Unterteil selbst mit einer eigenen Anlagefläche (15a, 15b, siehe Fig. 5) unter die an die Öffnung angrenzende Wand des Rahmens, so dass auf den Schmalseiten die Anlagefläche 12 vom Unterteil 3 überdeckt ist.

Das Unterteil 3 kann eine zentrale Ausnehmung 14 umfassen, welche vor allem der Gewichtsersparnis dient.

Fig. 5 ist eine perspektivische Ansicht des Unterteils 3.

Das Unterteil 3 umfasst die nebeneinander liegenden und ineinander übergehenden Kanäle 5a-5c.

Über den Kanal 5c kann ein Zug bzw. Kabel in die nachfolgenden Kanäle 5a und 5b geführt werden.

Das Unterteil umfasst die zwei sich gegenüberliegenden Anlageflächen 15a und 15b, welche in diesem Ausführungsbeispiel auf der Schmalseite angeordnet sind.

Das Unterteil verjüngt sich in Richtung der Anlagefläche 15b. An den Langseiten umfasst das Unterteil 3 dagegen keine Anlagefläche.

Das Unterteil 3 kann so, vorzugsweise mit der Anlagefläche 15b der schmäleren Seite voran, in die Öffnung eingefädelt werden, wird sodann wieder zurückgeschoben, so dass beide Anlageflächen 15a, 15b angrenzend zur Öffnung unter die Wand des Rahmens greifen.

Aufgrund des zwischen den Anlageflächen verbleibenden hervorstehenden Mittelteils 17 wird das Unterteil 3 zentriert.

Angrenzend an die Anlageflächen 15a, 15b kann das Unterteil 3 mit einer Fase 16 verstehen sein, welche das Einfädeln erleichtert.

Fig. 6 zeigt das Oberteil 2 von der Unterseite.

Das Oberteil 2 umfasst eine umlaufende Anlagefläche 12, welche durch einen seitlich herausragenden Kragen 11 gebildet wird.

Über das verbleibende Mittelteil 18 wird das Oberteil 3 zentriert.

Zu erkennen ist ferner der seitliche Schlitz 6 zum Einfädeln von Zügen und Kabeln.

Die hier dargestellte Zugdurchführung 1 wird vorzugsweise im bereits vormontierten Zustand verwendet.

Die Zugdurchführung 1 ist in diesem Ausführungsbeispiel im Wesentlichen trapezförmig ausgebildet.

Im vormontierten Zustand können Oberteil 2 und Unterteil 3 noch voneinander beabstandet sein.

Züge und Kabel können zunächst auf einfache Weise durch Aufweiten des Oberteils 2 durch den Schlitz 6 eingeführt werden.

Aufgrund der Kanäle 5a-5c sind Züge bzw. Kabel nunmehr schon parallel zueinander geführt.

Sodann kann das Unterteil 2 in den Rahmen eingefädelt werden.

Das Oberteil 2 wird dabei über das verbleibende Mittelteil 18 zentriert.

Die Schrauben können nunmehr angezogen werden, wodurch sich das Unterteil 3 auf das Oberteil 2 zubewegt.

Das verbleibende Mittelteil 17 des Unterteils wird in die Öffnung bewegt und die Zugdurchführung ist sodann formschlüssig in der Öffnung gesichert. Ein Kraftschluss durch Verklemmen ist nicht notwendig.

Aufgrund dieser Ausgestaltung, insbesondere aufgrund der Mittelteile 17, 18, die einen Formschluss in der Öffnung bilden, kann die Zugdurchführung 1, entsprechend lange Schrauben vorausgesetzt, flexibel für unterschiedliche Wandstärken, z.B. bei Aluminium- oder Karbonrahmen verwendet werden.

Fig. 7 und Fig. 8 sind perspektivische Ansichten einer weiteren Ausführungsform einer erfindungsgemäßen Zugdurchführung 1.

Im Unterschied zu der bezugnehmend auf Fig. 1 bis Fig. 6 dargestellten Zugdurchführung umfasst die in Fig. 7 und Fig. 8 dargestellte Zugdurchführung 1 zwei statt drei Kanäle 5a, 5b.

Ansonsten ist die Zugdurchführung 1 entsprechend der zuvor beschriebenen Zugdurchführung ausgebildet und umfasst insbesondere einen seitlichen Schlitz 6 im Oberteil 2, über den ein Zug bzw. ein Kabel in die Kanäle 5a, 5b eingefädelt werden kann.

Durch die Erfindung konnte eine Zugdurchführung bereitgestellt werden, welche sich leichter montieren lässt.

### Bezugszeichenliste

- 1: Zugdurchführung
- 2: Oberteil
- 3: Unterteil
- 4: Schraube
- 5a - 5c: Kanal
- 6: Schlitz
- 7: Seitenwand
- 8: Fase
- 9: Abschrägung
- 10: Schlitz
- 11: Kragen
- 12: Anlagefläche
- 13: Abschrägung
- 14: Ausnehmung
- 15a, 15b: Anlagefläche
- 16: Fase
- 17: verbleibendes Mittelteil
- 18: verbleibendes Mittelteil

## Patentansprüche

1. Zugdurchführung (1)für ein Fahrrad, umfassend ein Oberteil (2) und ein Unterteil (3), wobei Oberteil (2) und Unterteil (3) durch Zusammenziehen in einer Öffnung eines Rahmens festlegbar sind und wobei sich zumindest ein Kanal (5a - 5c) für einen Zug oder ein Kabel durch Oberteil (2) und Unterteil (3) erstreckt,
**dadurch gekennzeichnet, dass** das Oberteil (2) und/oder das Unterteil (3) einen seitlichen Schlitz (6) zum Einfädeln eines Zugs oder eines Kabels in den zumindest einen Kanal (5a - 5c)aufweist.

2. Zugdurchführung (1) nach dem vorstehenden Anspruch,
**dadurch gekennzeichnet, dass** nur das Oberteil (2) einen seitlichen Schlitz (6) aufweist.

3. Zugdurchführung (1) nach einem der vorstehenden Ansprüche, **dadurch gekennzeichnet, dass** die Seitenwand des Oberteils (2) und/oder Unterteils (3) angrenzend an den Schlitz (6) eine Fase (16) aufweist, welche in den Schlitz (6) übergeht.

4. Zugdurchführung (1) nach einem der vorstehenden Ansprüche, **dadurch gekennzeichnet, dass** die Zugdurchführung (1) zumindest zwei Kanäle (5a - 5c) aufweist, welche ineinander übergehen.

5. Zugdurchführung (1) nach einem der vorstehenden Ansprüche, **dadurch gekennzeichnet, dass** der zumindest eine Kanal (6) im montierten Zustand einen Versatz zwischen Oberteil (2) und Unterteil (3) aufweist.

6. Zugdurchführung (1) nach einem der vorstehenden Ansprüche, **dadurch gekennzeichnet, dass** das Unterteil (3) auf zwei sich gegenüberliegenden Seiten jeweils eine Anlagefläche (15a, 15b) für die an die Öffnung des Unterteils (3) angrenzenden Unterseite des Rahmens aufweist.

7. Zugdurchführung (1) nach dem vorstehenden Anspruch,
**dadurch gekennzeichnet, dass** das Oberteil (2) eine umlaufende Anlagefläche (15a, 15b) für die an die Öffnung angrenzende Oberseite des Rahmens aufweist.

8. Zugdurchführung (1) nach einem der vorstehenden Ansprüche, **dadurch gekennzeichnet, dass** sich die Zugdurchführung (1) in ihrer Breite verjüngt.

9. Zugdurchführung (1) nach einem der vorstehenden Ansprüche, **dadurch gekennzeichnet, dass** die Zugdurchführung (1) in der Draufsicht als Viereck ausgebildet ist.

10. Zugdurchführung (1) nach einem der vorstehenden Ansprüche, **dadurch gekennzeichnet, dass** die Zugdurchführung (1) in der Draufsicht im Wesentlichen trapezförmig ausgebildet ist.

11. Zugdurchführung (1) nach einem der vorstehenden Ansprüche, **dadurch gekennzeichnet, dass** der zumindest eine Kanal (5a - 5c) in einem Winkel von 30° bis 70° zur Oberseite (2) der Zugdurchführung (1) verläuft.

12. Zugdurchführung (1) nach einem der vorstehenden Ansprüche, **dadurch gekennzeichnet, dass** Oberteil (2) und Unterteil (3) mittels zumindest einer Schraube (4) zusammenziehbar sind, insbesondere mittels zwei diagonal gegenüberliegender Schrauben(4).

13. Zugdurchführung (1) nach dem vorstehenden Anspruch,
**dadurch gekennzeichnet, dass** die zumindest eine Schraube (4) als gewindeformende Schraube ausgebildet ist.

14. Zugdurchführung (1) nach einem der vorstehenden Ansprüche, **dadurch gekennzeichnet, dass** Oberteil (2) und Unterteil (3) vormontiert sind und im vormontierten Zustand in die Öffnung des Rahmens einsetzbar sind.

15. Fahrrad, umfassend eine Zugdurchführung (1) nach einem der vorstehenden Ansprüche.

## Claims

1. A cable feedthrough (1) for a bicycle, comprising an upper part (2) and a lower part (3), wherein the upper part (2) and the lower part (3) can be fixed in an opening of a frame by being drawn together, and wherein at least one passage (5a - 5c) for a cable or a wire extends through the upper part (2) and the lower part (3);
**characterized in that** the upper part (2) and/or the lower part (3) has a lateral slot (6) for inserting a cable or a wire into the at least one passage (5a - 5c).

2. The cable feedthrough (1) according to the preceding claim, **characterized in that** only the upper part (2) has a lateral slot (6).

3. The cable feedthrough (1) according to any one of the preceding claims,
**characterized in that** the side wall of the upper part (2) and/or of the lower part (3) has a chamfer (16) adjacent to the slot (6), which merges into the slot (6).

4. The cable feedthrough (1) according to any one of the preceding claims,
**characterized in that** the cable feedthrough (1) has at least two passages (5a - 5c) which merge into one another.

5. The cable feedthrough (1) according to any one of the preceding claims,
**characterized in that** the at least one passage (6) exhibits an offset between the upper part (2) and the lower part (3) in the assembled state thereof.

6. The cable feedthrough (1) according to any one of the preceding claims,
**characterized in that** the lower part (3) has a respective contact surface (15a, 15b) on two opposite sides thereof, for the underside of the frame adjacent to the opening of the lower part (3).

7. The cable feedthrough (1) according to the preceding claim, **characterized in that** the upper part (2) has a circumferential contact surface (15a, 15b) for the upper side of the frame adjacent to the opening.

8. The cable feedthrough (1) according to any one of the preceding claims,
**characterized in that** the cable feedthrough (1) tapers in its width.

9. The cable feedthrough (1) according to any one of the preceding claims,
**characterized in that** the cable feedthrough (1) has a square shape in a top plan view.

10. The cable feedthrough (1) according to any one of the preceding claims, **characterized in that** the cable feedthrough (1) is substantially trapezoidal in a top plan view.

11. The cable feedthrough (1) according to any one of the preceding claims,
**characterized in that** the at least one passage (5a - 5c) extends at an angle of 30° to 70° relative to the upper side (2) of the cable feedthrough (1).

12. The cable feedthrough (1) according to any one of the preceding claims,
**characterized in that** the upper part (2) and the lower part (3) can be drawn together by means of at least one screw (4), in particular by means of two diagonally opposite screws (4).

13. The cable feedthrough (1) according to the preceding claim,
**characterized in that** the at least one screw (4) is designed as a thread-forming screw.

14. The cable feedthrough (1) according to any one of the preceding claims,
**characterized in that** the upper part (2) and the lower part (3) are pre-assembled and can be inserted into the opening of the frame in the pre-assembled state.

15. A bicycle, comprising a cable feedthrough (1) according to any one of the preceding claims.

## Revendications

1. Un guidage de câble (1) pour une bicyclette, comprenant une partie supérieure (2) et une partie inférieure (3), la partie supérieure (2) et la partie inférieure (3) pouvant être fixées dans une ouverture d'un cadre par serrage, et au moins un passage (5a - 5c) pour un câble ou un fil s'étendant à travers la partie supérieure (2) et la partie inférieure (3), **caractérisé en ce que** la partie supérieure (2) et/ou la partie inférieure (3) présente une fente latérale (6) permettant l'introduction d'un câble ou d'un fil dans ledit au moins un passage (5a - 5c).

2. Le guidage de câble (1) selon la revendication précédente,
**caractérisé en ce que** seule la partie supérieure (2) présente une fente latérale (6).

3. Le guidage de câble (1) selon l'une quelconque des revendications précédentes,
**caractérisé en ce que** la paroi latérale de la partie supérieure (2) et/ou de la partie inférieure (3), adjacent à la fente (6), présente un chanfrein (16) qui se prolonge dans ladite fente (6).

4. Le guidage de câble (1) selon l'une quelconque des revendications précédentes,
**caractérisé en ce que** le guidage de câble (1) présente au moins deux passages (5a - 5c) qui se prolongent l'un dans l'autre.

5. Le guidage de câble (1) selon l'une quelconque des revendications précédentes,
**caractérisé en ce que** ledit au moins un passage (6) présente, à l'état assemblé, un décalage entre la partie supérieure (2) et la partie inférieure (3).

6. Le guidage de câble (1) selon l'une quelconque des revendications précédentes,
**caractérisé en ce que** la partie inférieure (3) présente, sur deux côtés opposés, respectivement une surface d'appui (15a, 15b) pour la face inférieure du cadre adjacente à l'ouverture de ladite partie inférieure (3).

7. Le guidage de câble (1) selon la revendication précédente,
**caractérisé en ce que** la partie supérieure (2) présente une surface d'appui périphérique (15a, 15b) pour la face supérieur du cadre adjacent à l'ouverture.

8. Le guidage de câble (1) selon l'une quelconque des revendications précédentes,
**caractérisé en ce que** le guidage de câble (1) se rétrécit en largeur.

9. Le guidage de câble (1) selon l'une quelconque des revendications précédentes,
**caractérisé en ce que** le guidage de câble (1) est conçu en vue de dessus comme un quadrilatère.

10. Le guidage de câble (1) selon l'une quelconque des revendications précédentes,
**caractérisé en ce que** le guidage de câble (1) est sensiblement trapézoïdal en vue de dessus.

11. Le guidage de câble (1) selon l'une quelconque des revendications précédentes,
**caractérisé en ce que** ledit au moins un passage (5a - 5c) s'étend selon un angle de 30° à 70° par rapport à la face supérieure (2) du guidage de câble (1).

12. Le guidage de câble (1) selon l'une quelconque des revendications précédentes,
**caractérisé en ce que** la partie supérieure (2) et la partie inférieure (3) peuvent être serrées l'une contre l'autre au moyen d'au moins une vis (4), en particulier au moyen de deux vis (4) diagonalement opposées.

13. Le guidage de câble (1) selon la revendication précédente,
**caractérisé en ce que** ladite au moins une vis (4) est réalisée comme une vis autotaraudeuse.

14. Le guidage de câble (1) selon l'une quelconque des revendications précédentes,
**caractérisé en ce que** la partie supérieure (2) et la partie inférieure (3) sont prémontées et, à l'état prémonté, peuvent être insérées dans l'ouverture du cadre.

15. Une bicyclette, comprenant un guidage de câble (1) selon l'une quelconque des revendications précédentes.
